# EUROPEAN PATENT SPECIFICATION

(11) **EP 2 271 202 B1**
(45) Date of publication and mention of the grant of the patent: **13.08.2014**
(21) Application number: 09728454.1
(22) Date of filing: 26.03.2009
(51) Int. Cl.: A01K 1/12, A01K 1/00, A01K 1/02

(54) **EXIT GATE FOR A MILKING PARLOUR AND MILKING PARLOUR**
AUSGANG FÜR MELKSTAND UND MELKSTAND
PORTE DE SORTIE POUR SALLE DE TRAITE ET SALLE DE TRAITE

(30) Priority: 31.03.2008 DE 102008016591
(43) Date of publication of application: 12.01.2011
(73) Proprietor: GEA Farm Technologies GmbH, 59199 Bönen (DE)
(72) Inventor: KORTHAUER, Günter, 46514 Schermbeck (DE); MADER, Thomas, 33378 Rheda-Wiedenbrück (DE); SCHIEFER, Herbert, 59302 Oelde (DE); GOWIN, Andrea, 59302 Oelde (DE)
(74) Representative: Neumann, Ditmar
(86) International application number: PCT/EP2009/053624
(87) International publication number: WO 2009/121800

(56) References cited:
- EP-A- 0 610 093
- US-A- 3 415 227

## Description

The subject matter of the invention relates to an exit gate of a milking parlour, and to a milking parlour with an exit gate, wherein the exit gate is arranged pivotably on a shaft which has at least one driver which is connected in a positionally fixed manner to the shaft, and at least one gate element which can be connected releasably to the driver.

Although the invention is described below in conjunction with the milking of cows, it is pointed out that the subject matter of the invention is suitable in particular in conjunction with the milking of sheep, goats, llamas, camels, dromedaries, buffaloes, mares, donkeys, yaks and other milk-dispensing animals. The invention can be used both in robot-supported milking installations and also in fully automatic, semiautomatic and conventional milking installations.

In order to milk an animal, the animal is conducted into a milking parlour. The milking parlour has at least one milking place With a device for milking an animal, and an exit gate. Milking parlours are known, in which a plurality of animals are each positioned next to one another at a milking place. The animals are subsequently subjected to a milking operation. The animals leave the milking parlour through an exit gate.

Document US 3,415,227 discloses an gate with a rotatable shaft to which an upstanding post is rigidly connected. A gate assembly is connected to the shaft. The connection between the shaft and the gate assembly is achieved by a pair of sleeves, through which the shaft rotatably extends. A stop element rigidly interconnects the sleeves and can interact with the post when the rotatable shaft is rotated.

EP-A1-0 549 324 discloses a system for entering and leaving a milking parlour. The milking parlour is constructed as a herringbone-type milking parlour in which cows are arranged obliquely with respect to one another in stalls delimited by herringbone-shaped barriers and a frame holding back the cow. The milking is undertaken to the sides of the cow's legs. An exit gate which is mounted rotatably is provided. The gate can adopt a substantially horizontal position in which the cow can leave the milking parlour. As a result of rotation of the exit gate into a substantially vertical position of the exit gate, the exit gate acts on the rear part of the cow and drives the latter out of the milking parlour. In order to align the cow in the milking parlour, the exit gate can be moved back. The alignment of the cow in the milking parlour is also referred to as an indexing operation.

EP-A2-0 610 093 describes a development of the milking parfour. EP-A2-0 610 093 discloses a milking parlour which has at least one milking place with a device for milking an animal, and an exit gate, wherein the exit gate is arranged pivotably on a shaft which has at least one driver which is connected in a positionally fixed manner to the shaft, and at least one gate element which is connected releasably to the driver. The exit gate can be pivoted relative to the shaft. Configuration of the gate elements enables indexing individual to an animal to take place.

A further configuration of a milking parlour is known from the operating manual/installation manual/replacement part list 7123-9000-008; 12-2004 "Side-by-side Melkstandgerüst [milking parlour frame] Global 90i: 720 mm" from Westfalia Surge GmbH. Indexing individual to an animal is also achieved in this milking parlour. The outlay on installing such milking parlours and in particular the exit gates is associated with a considerable outlay on time, since the drivers have to be welded to the shaft. This work takes place in situ, i.e. at the location at which the milking parlour is to be erected. The components are surface-treated, in particular hot-dip galvanized. In the case of hot-dip galvanization, the coating material zinc diffuses into the surface of the steel material which is to be coated. By burning the zinc layer in the region of the weld, some of the advantages of hot-dip galvanization are eliminated.

Taking this as the starting point, the present invention is based on the aim of reducing the outlay on installing an exit gate and a milking parlour. In particular, welding work during the installation is to be kept to a minimum.

This object is achieved according to the invention by an exit gate of a milking parlour according to Claim 1 and by a milking parlour according to Claim 11. Advantageous developments and configurations of the invention are the subject matter of the respective dependent claims.

The exit gate according to the invention of a milking parlour comprises a pivotable shaft. At least one driver which is positionally fixed is connected to the shaft. At least one gate element can be connected releasably to the driver. A connecting unit which has a first part and a second part is provided. The first and the second part delimit a channel through which the shaft extends. The first part of the connecting unit is connected to the gate element, with the second part being connected to the first part. The second part has a receptacle into which the driver at least partially projects.

Owing to the fact that a connecting unit which is of two-part design is provided, the installation of a gate element on the shaft is considerably simplified. In particular owing to the fact that the connecting unit has a receptacle into which the driver at least partially projects, no welding work is necessary in situ. The connection of the first part to the second part of the connecting unit is preferably a screw connection. The proposed configuration of the exit gate also has the advantage that damage to a coating of the shaft, of the gate elements and of the further components of the exit gate by means of welding does not occur. The driver can be welded to the shaft, for example before the coating operation. The shaft together with the at least one driver can subsequently be subject to a coating operation, in particular to hot-dip galvanization.

In order for the gate elements to be pivotable, it is proposed that the receptacle extends over part of the circumference of the shaft. In particular, it is proposed that the gate element can be pivoted over a pivoting angle of at least 90°.

The pivoting angle is preferably selected in such a manner that the gate element can be pivoted to an extent such that an animal can leave the milking place if there is no additional connection between the gate element and the shaft.

According to another advantageous configuration of the exit gate, it is proposed that a unit by means of which the pivoting angle can be limited is provided. In particular, it is proposed that the unit has a locking element connected to the second part.

According to yet another advantageous configuration, it is proposed that the locking element has a lever which can be pivoted about an axis. This configuration of the exit gate creates a possibility of manually actuating a gate element. If the locking element has been pivoted into a discharge position (unlocking position), the gate element can be pivoted upwards about the shaft. The pivoting angle here is sufficient in order to open up the possibility for an animal to be driven from the milking place.

According to yet another advantageous configuration, it is proposed that a spacer can be connected releasably to the locking element. An indexing angle can be varied by means of the spacer. By this means, the indexing can be adapted to different animal sizes. If appropriate, animals of differing size can be gathered together in groups which are conducted for the milking operation to milking places having different indexing angles.

Furthermore, the provision of a spacer enables the indexing angle to be adapted to different animal breeds with the animals having a standard and non standard size.

In order to compensate for possible manufacturing tolerances and in order to avoid noise being produced when an animal moves against the gate element, it is proposed, according to yet another advantageous configuration of the exit gate, that a damping element is connected releasably to the locking element. The damping element may be, for example, an element made of an elastic material.

According to yet another advantageous configuration, it is proposed that at least one stop element is connected to the second part. The stop element interacts with the driver. By means of the provision of the stop element, force is better introduced into the second element.

According to yet another advantageous configuration of the exit gate according to the invention, it is proposed that a spacer and/or a damping element can be connected to the stop.

According to yet another inventive concept, a milking parlour which has at least one milking place with a device for milking an animal, and an exit gate is proposed, wherein the exit gate is arranged pivotably on a shaft which has at least one driver which is connected in a positionally fixed manner to the shaft, and at least one gate element which is connected releasably to the driver. A connecting unit with two parts, a first part and a second part, is provided. The first part is connected to the gate element while the second part is connected to the first part of the connecting unit. The first and the second part of the connecting unit delimit a channel through which the shaft extends. The second part has a receptacle into which the driver at least partially projects.

A configuration of a milking parlour in which the exit gate is designed according to at least one of Claims 2 to 10 is particularly preferred.

In order to be able to milk a plurality of animals in a milking parlour, it is proposed that the milking parlour is configured with a plurality of milking places arranged next to one another. A plurality of drivers spaced apart in the axial direction of the shaft are provided. Furthermore, a plurality of gate elements are provided, with one gate element in each case interacting with a corresponding driver.

Further details and advantages of the invention are explained with reference to the exemplary embodiments illustrated in the drawing without the subject matter of the invention being limited to said specific exemplary embodiments.

In the drawing:
- Figure 1: shows perspectively a section of an exit gate,
- Figure 2: enlarges the detail A according to Figure 1, and
- Figure 3: enlarges the detail B according to Figure 1.

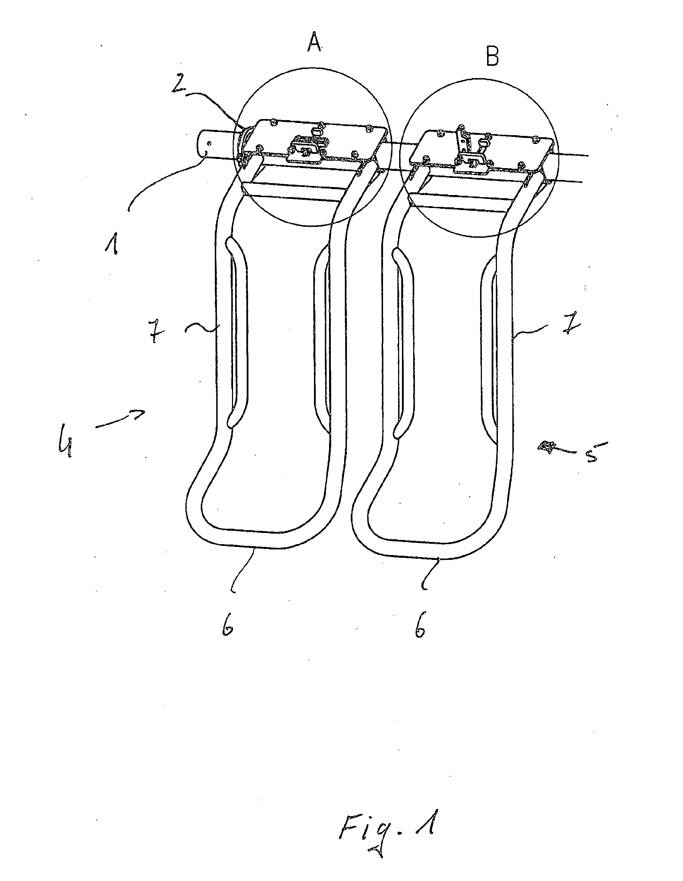

Figure 1 shows, in a perspective view, a section of an exit gate of a milking parlour. The milking parlour can be a "side-by-side milking parlour" in which the animals which are to be milked are aligned essentially parallel next to one another. The exit gate has a pivotable shaft 1. The shaft is aligned substantially horizontally. It is mounted in a framework (not illustrated). Spacers 2 are provided in particular in the end regions of the shaft in order to undertake and adjust an alignment of the shaft in the longitudinal direction of the same. The shaft is preferably mounted at the end regions. Additional bearing points can be provided as a function of the length of the shaft, size of the milking parlour, number of bearing points and number of gate elements arranged on the shaft.

In order to pivot the shaft 1, a pivoting device (not illustrated) is provided. The pivoting device may comprise, for example, a cylinder/piston unit which is in particular a pneumatically operating unit. In this case, a compressed air cylinder which is connected to a framework is particularly preferred. The piston rod of the compressed air cylinder is connected to the shaft via a lever. The cylinder/piston unit may also be operated hydraulically. The piston rod preferably has an articulated connection to the lever. A plurality of driving units may also be provided as a function of the size of the exit gate. The driving units can be activated via a corresponding control means.

The shaft 1 has a driver 3 which is connected in a positionally fixed manner to the shaft 1. The drivers 3 are preferably welded to the shaft. In particular, they essentially have a rectangular cross section. The drivers may also be drivers which are connected releasably to the shaft. The drivers may be in the shape of a bolt.

If the drivers are welded to the shaft, then a coating of the shaft and drivers, in particular hot-dip galvanization, preferably takes place subsequently in order to protect the surface against environmental influences.

Gate elements 4 and 5 are connected to the shaft 1. The gate elements 4 and 5 comprise a yoke 6 which is designed in such a manner that the longitudinal limbs 7 can substantially come to bear against the shoulders of an animal when the head and the neck of the animal extend through the ycke 6.

A plurality of gate elements can be arranged on the shaft. The number of gate elements is dependent on the number of milking places in the milking parlour and size of the milking parlour.

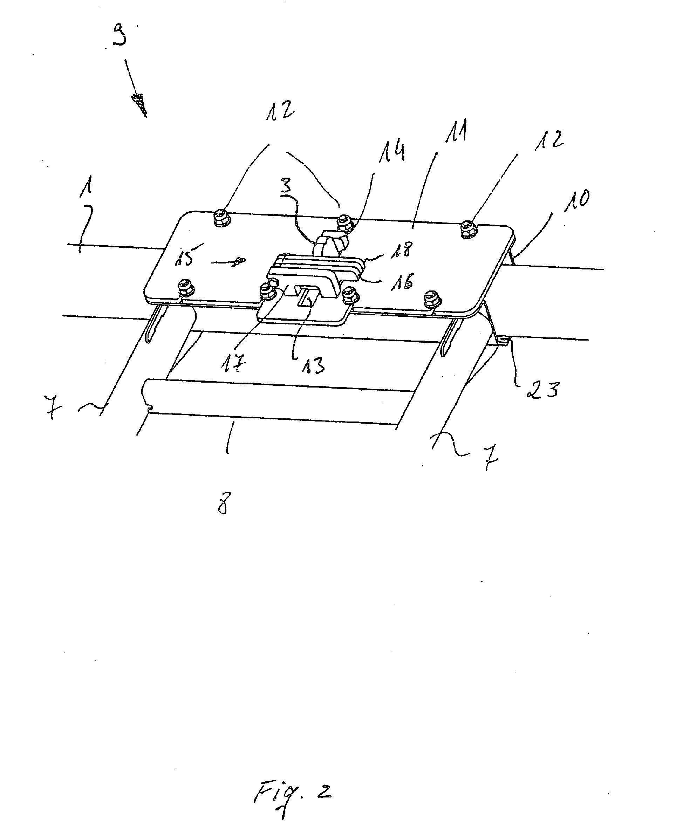

Figure 2 shows on an enlarged scale a view of a detail according to Figure 1. Longitudinal limbs 7 of a gate element, which longitudinal limbs are connected to each other by a cross strut 8, can be seen. The cross strut 8 is not absolutely necessary, but increases the rigidity of the yoke 6. A connecting unit 9 is connected to the limbs 7. The connecting unit 9 has a first part 10 and a second part 11. The first part 10 and the second part 11 are connected to each other. It is apparent from the illustration in Figure 2 that the connection of the parts 10 and 11 is a screw connection using screws 12. The screws 12 or the screw connection are/is preferably designed in such a manner that they/it lie/lies above the shaft, and therefore no risk of injury for the animals or the operator arises at the screws. There is also the option of choosing a different connection.

It is apparent from the illustration according to Figure 2 that the first part 10 is formed in a substantially U-shaped manner. The cross-sectional shape of the first part 10 is selected in such a manner that the connecting unit 9 together with the second part 11 forms a channel 23 through which the shaft 1 extends. Sliding elements can be provided within the channel 23 in order to reduce frictional forces between the connecting unit 9 and the shaft.

The second part 11 has a receptacle 13 through which the driver 3 extends. The receptacle 13 extends over part of the circumference of the shaft 1.

The extent of the receptacle 13 in the circumferential direction of the shaft 1 is greater than the longitudinal extent of the driver 3 in the circumferential direction of the shaft 1.

It is apparent from the illustration according to Figure 2 that the second part 11 has a stop 14 which can come to bear against the driver 3.

The reference number 15 identifies a unit by means of which the pivoting angle of the gate element 5 can be limited. The unit 15 comprises a locking element 16. The locking element 16 can be pivoted about an axis running substantially transversely with respect to the longitudinal axis of the shaft 1. The locking element 16 is designed in the form of a lever which, in the locked state, as illustrated in Figure 2, can come to bear against a holder 17.

The pivoting angle or the distance between the driver 3 and the locking element 16 can be changed as a function of the thickness of the locking element 16. Such a change is expedient, for example, if different indexings are to be realized. The locking element 16 can also be equipped with a damping element 18 in order to reduce an emission of noise when the locking element 16 comes to bear against the driver 3.

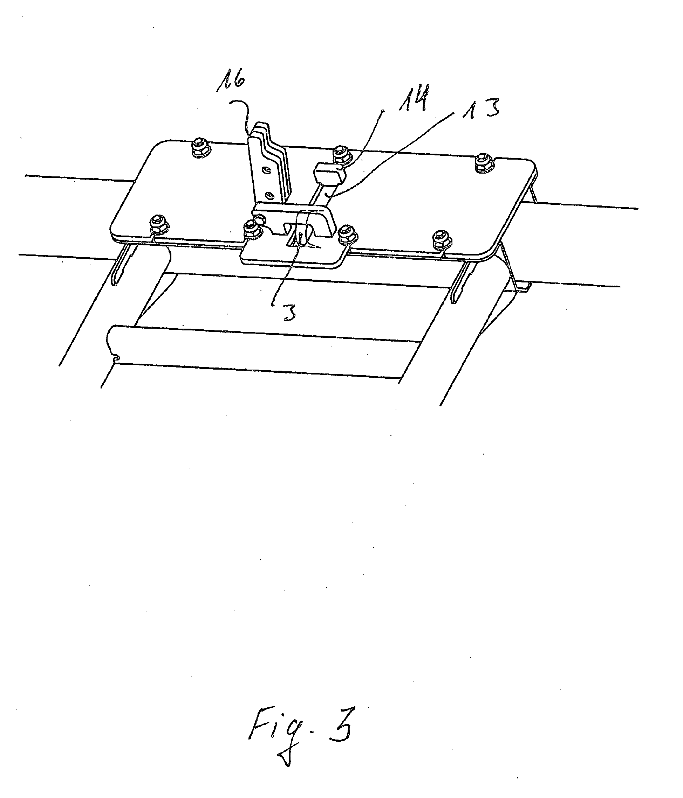

Figure 3 shows a view of a detail of the exit gate, with the locking element 16 being in a discharge position.

If it is established during a milking operation that one animal should leave the milking place while the other animals should remain in the milking parlour, it is necessary to raise or pivot the gate element. In order to permit a pivoting operation, the locking element 16 is pivoted into a discharge position. The gate element can be pivoted upwards about the shaft 1, with the pivoting angle being limited by the pairing of receptacle 13 and driver 3. The pivoting angle is sufficient in order to provide the possibility for an animal to be driven from the milking place.

In the exemplary embodiment illustrated, the first part is designed in a substantially U-shaped manner. This is not absolutely necessary. Other contours or cross sections of the first part are possible. There is also the possibility of the first part correspondingly being of plate-like design, with the second part being of U-shaped design. This opens up the possibility of simplifying the installation, since the gate element can be hung on the shaft.

The invention has numerous advantages. In particular, the outlay on installation is considerably reduced by means of the invention. Furthermore, the configuration according to the invention of the exit gate or of the milking parlour also opens up the possibility of subsequently changing and adapting the indexing of the pivoting angle by means of an appropriate configuration of the locking element and, if appropriate, of the stop.

### List of reference numbers

- 1: Shaft
- 2: Spacer
- 3: Driver
- 4: Gate element
- 5: Gate element
- 6: Yoke
- 7: Limb
- 8: Cross strut
- 9: Connecting unit
- 10: First part
- 11: Second part
- 12: Srews
- 13: Receptacle
- 14: Stop
- 15: Unit
- 16: Locking element
- 17: Holder
- 18: Damping element
- 23: Channel

## Claims

1. Milking parlour exit gate, comprising a pivotable shaft (1), at least one driver (3) which is connected in a positionally fixed manner to the shaft (1), and at least one gate element (5, 6) which is connected releasably to the driver (3),wherein the at least one gate element (4, 5) comprise a yoke (6) which is designed in such a manner that longitudinal limbs (7) can substantially come to bear against the shoulders of an animal when the head and the neck of the animal extend through the yoke (6), **characterized in that** a connecting unit (9) is provided with a first part (10) which is connected to the gate element (4, 5) and with a second part (11) which is connected to the first part (10), the first and the second part (10, 11) delimiting a channel (23) through which the shaft (1) extends, and **in that** the second part (11) has a receptacle (13) into which the driver (3) at least partially projects.

2. Exit gate according to Claim 1, **characterized in that** the receptacle (13) extends over part of the circumference of the shaft (1).

3. Exit gate according to Claim 2, **characterized in that** the gate element (4, 5) can be pivoted over a pivoting angle of at least 90°.

4. Exit gate according to Claim 3, **characterized in that** a unit (15) by means of which the pivoting angle can be limited is provided.

5. Exit gate according to Claim 4, **characterized in that** the unit (15) has a locking element (16) connected to the second part (11).

6. Exit gate according to Claim 5, **characterized in that** the locking element (16) has a lever which can be pivoted about an axis.

7. Exit gate according to Claim 5 or 6, **characterized in that** a spacer is releasably connected to the locking element (16).

8. Exit gate according to Claim 5, 6 or 7, **characterized in that** a damping element (18) is releasably connected to the locking element (16).

9. Exit gate according to at least one of the preceding Claims 2 to 8, **characterized in that** at least one stop (14) is connected to the second part (11).

10. Exit gate according to Claim 9, **characterized in that** a spacer and/or a damping element is connected to the stop (14).

11. Milking parlour which has at least one milking place with a device for milking an animal, and an exit gate, wherein the exit gate is arranged pivotably on a shaft (1) which has at least one driver (3) which is connected in a positionally fixed manner to the shaft (1), and at least one gate element (4, 5) which is connected releasably to the driver (3), wherein the at least one gate element (4, 5) comprise a yoke (6) which is designed in such a manner that longitudinal limbs (7) can substantially come to bear against the shoulders of an animal when the head and the neck of the animal extend through the yoke (6), **characterized in that** a connecting unit (9) is provided with a first part (10) which is connected to the gate element (4, 5), and with a second part (11) which is connected to the first part (10), the first and the second part (10, 11) delimiting a channel (23) through which the shaft (1) extends, and **in that** the second part (11) has a receptacle (13) into which the driver (3) at least partially projects.

12. Milking parlour according to Claim 11, **characterized in that** the exit gate is designed according to at least one of Claims 2 to 10.

13. Milking parlour with a plurality of milking places arranged next to one another according to Claim 11 or 12, **characterized in that** a plurality of drivers (3) which is spaced apart in the axial direction of the shaft and a plurality of gate elements (4, 5) are provided.

## Patentansprüche

1. Melkstandausgangstor, umfassend eine verschwenkbare Welle (1), mindestens einen Mitnehmer (3), der ortsfest mit der Welle (1) verbunden ist, und mindestens ein Torelement (4, 5), das lösbar mit dem Mitnehmer (3) verbunden ist, wobei das mindestens eine Torelement (4, 5) ein Joch (6) umfasst, das so ausgelegt ist, dass Längsschenkel (7) im Wesentlichen an den Schultern eines Tiers zum Anliegen kommen können, wenn sich der Kopf und der Hals des Tiers durch das Joch (6) erstrecken, **dadurch gekennzeichnet, dass** eine Verbindungseinheit (9) mit einem ersten Teil (10), das mit dem Torelement (4, 5) verbunden ist, und mit einem zweiten Teil (11), das mit dem ersten Teil (10) verbunden ist, versehen ist, wobei das erste und das zweite Teil (10, 11) einen Kanal (23) begrenzen, durch den sich die Welle (1) erstreckt, und dass das zweite Teil (11) eine Aufnahme (13) hat, in die der Mitnehmer (3) mindestens teilweise hineinragt.

2. Ausgangstor nach Anspruch 1, **dadurch gekennzeichnet, dass** sich die Aufnahme (13) über einen Teil des Umfangs der Welle (1) erstreckt.

3. Ausgangstor nach Anspruch 2, **dadurch gekennzeichnet, dass** das Torelement (4, 5) über einen Verschwenkwinkel von mindestens 90° verschwenkbar ist.

4. Ausgangstor nach Anspruch 3, **dadurch gekennzeichnet, dass** eine Einheit (15) vorgesehen ist, durch die der Verschwenkwinkel begrenzbar ist.

5. Ausgangstor nach Anspruch 4, **dadurch gekennzeichnet, dass** die Einheit (15) ein Verriegelungselement (16) hat, das mit dem zweiten Teil (11) verbunden ist.

6. Ausgangstor nach Anspruch 5, **dadurch gekennzeichnet, dass** das Verriegelungselement (16) einen um eine Achse verschwenkbaren Hebel hat.

7. Ausgangstor nach Anspruch 5 oder 6, **dadurch gekennzeichnet, dass** ein Abstandshalter mit dem Verriegelungselement (16) lösbar verbindbar ist.

8. Ausgangstor nach Anspruch 5, 6 oder 7, **dadurch gekennzeichnet, dass** ein Dämpfungselement (18) mit dem Verriegelungselement (16) lösbar verbindbar ist.

9. Ausgangstor nach mindestens einem der vorhergehenden Ansprüche 2 bis 8, **dadurch gekennzeichnet, dass** mindestens ein Anschlag (14) mit dem zweiten Teil (11) verbunden ist.

10. Ausgangstor nach Anspruch 9, **dadurch gekennzeichnet, dass** ein Abstandshalter und/oder ein Dämpfungselement mit dem Anschlag (14) verbunden ist.

11. Melkstand, der mindestens einen Melkplatz mit einer Einrichtung zum Melken eines Tieres und ein Ausgangstor hat, wobei das Ausgangstor verschwenkbar an einer Welle (1) angeordnet ist, die mindestens einen Mitnehmer (3), der ortsfest mit der Welle (1) verbunden ist, und mindestens ein Torelement (4, 5), welches mit dem Mitnehmer (3) lösbar verbunden ist, hat, wobei das mindestens eine Torelement (4, 5) ein Joch (6) umfasst, das so ausgelegt ist, dass Längsschenkel (7) im Wesentlichen an den Schultern eines Tiers zum Anliegen kommen können, wenn sich der Kopf und der Hals des Tiers durch das Joch (6) erstrecken, **dadurch gekennzeichnet, dass** eine Verbindungseinheit (9) mit einem ersten Teil (10), das mit dem Torelement (4, 5) verbunden ist, und mit einem zweiten Teil (11), das mit dem ersten Teil (10) verbunden ist, versehen ist, wobei das erste und das zweite Teil (10, 11) einen Kanal (23) begrenzen, durch den sich die Welle (1) erstreckt, und dass das zweite Teil (11) eine Aufnahme (13) hat, in die der Mitnehmer (3) mindestens teilweise hineinragt.

12. Melkstand nach Anspruch 11, **dadurch gekennzeichnet, dass** das Ausgangstor nach mindestens einem der Ansprüche 2 bis 10 ausgelegt ist.

13. Melkstand mit mehreren nebeneinander angeordneten Melkplätzen nach Anspruch 11 oder 12, **dadurch gekennzeichnet, dass** mehrere in axialer Richtung der Welle beabstandete Mitnehmer (3) und mehrere Torelemente (4, 5) vorgesehen sind.

## Revendications

1. Porte de sortie pour salle de traite, comprenant un arbre pivotant (1), au moins un dispositif d'entraînement (3) connecté de manière fixée en position à l'arbre (1) et au moins un élément de porte (4, 5) qui est connecté de manière amovible au dispositif d'entraînement (3), l'au moins un élément de porte (4, 5) comprenant un élément de joug (6) conçu de manière à ce que des branches longitudinales (7) puissent venir sensiblement en appui contre les épaules d'un animal lorsque la tête et le cou de l'animal s'étendent à travers le joug (6), **caractérisée en ce qu'**une unité de connexion (9) est prévue, avec une première partie (10) qui est connectée à l'élément de porte (4, 5) et avec une deuxième partie (11) qui est connectée à la première partie (10), la première et la deuxième partie (10, 11) délimitant un canal (23) à travers lequel s'étend l'arbre (1), et **en ce que** la deuxième partie (11) présente un réceptacle (13) dans lequel le dispositif d'entraînement (3) fait saillie au moins en partie.

2. Porte de sortie selon la revendication 1, **caractérisée en ce que** le réceptacle (13) s'étend sur une partie de la circonférence de l'arbre (1).

3. Porte de sortie selon la revendication 2, **caractérisée en ce que** l'élément de porte (4, 5) peut être pivoté sur un angle de pivotement d'au moins 90°.

4. Porte de sortie selon la revendication 3, **caractérisée en ce qu'**il est prévu une unité (15) au moyen de laquelle l'angle de pivotement peut être limité.

5. Porte de sortie selon la revendication 4, **caractérisée en ce que** l'unité (15) présente un élément de verrouillage (16) connecté à la deuxième partie (11).

6. Porte de sortie selon la revendication 5, **caractérisée en ce que** l'élément de verrouillage (16) présente un levier qui peut être pivoté autour d'un axe.

7. Porte de sortie selon la revendication 5 ou 6, **caractérisée en ce qu'**un dispositif d'espacement est connecté de manière amovible à l'élément de verrouillage (16).

8. Porte de sortie selon la revendication 5, 6 ou 7, **caractérisée en ce qu'**un élément d'amortissement (18) est connecté de manière amovible à l'élément de verrouillage (16).

9. Porte de sortie selon au moins l'une quelconque des revendications 2 à 8, **caractérisée en ce qu'**au moins une butée (14) est connectée à la deuxième partie (11).

10. Porte de sortie selon la revendication 9, **caractérisée en ce qu'**un dispositif d'espacement et/ou un élément d'amortissement est connecté à la butée (14).

11. Salle de traite présentant au moins une zone de traite avec un dispositif pour traire un animal, et une porte de sortie, la porte de sortie étant agencée de manière pivotante sur un arbre (1) qui présente au moins un dispositif d'entraînement (3) qui est connecté de manière fixée en position à l'arbre (1), et au moins un élément de porte (4, 5) qui est connecté de manière amovible au dispositif d'entraînement (3), l'au moins un élément de porte (4, 5) comprenant un joug (6) qui est conçu de manière à ce que des branches longitudinales (7) puissent venir sensiblement en appui contre les épaules d'un animal lorsque la tête et le cou de l'animal s'étendent à travers le joug (6), **caractérisée en ce qu'**une unité de connexion (9) est prévue, avec une première partie (10) qui est connectée à l'élément de porte (4, 5), et avec une deuxième partie (11) qui est connectée à la première partie (10), la première et la deuxième partie (10, 11) délimitant un canal (23) à travers lequel s'étend l'arbre (1), et **en ce que** la deuxième partie (11) présente un réceptacle (13) dans lequel le dispositif d'entraînement (3) fait saillie au moins en partie.

12. Salle de traite selon la revendication 11, **caractérisée en ce que** la porte de sortie est conçue selon l'une quelconque des revendications 2 à 10.

13. Salle de traite comprenant une pluralité de zones de traite agencées les unes à côté des autres selon la revendication 11 ou 12, **caractérisée en ce qu'**une pluralité de dispositifs d'entraînement (3) espacés dans la direction axiale de l'arbre et une pluralité d'éléments de porte (4, 5) sont prévus.
